# EUROPÄISCHE PATENTSCHRIFT

(11) **EP 2 984 408 B1**
(45) Veröffentlichungstag und Bekanntmachung des Hinweises auf die Patenterteilung: **24.07.2019**
(21) Anmeldenummer: 14723305.0
(22) Anmeldetag: 25.03.2014
(51) Int. Cl.: F23C 3/00, F27B 7/20

(54) **BRENNEINRICHTUNG**
COMBUSTION DEVICE
DISPOSITIF DE COMBUSTION

(30) Priorität: 10.04.2013 AT 2802013
(43) Veröffentlichungstag der Anmeldung: 17.02.2016
(73) Patentinhaber: Keuschnigg, Josef, 8324 Kirchberg (AT)
(72) Erfinder: KEUSCHNIGG, Josef jun., AT-8200 Nitscha (AT)
(74) Vertreter: Gibler & Poth Patentanwälte KG
(86) Internationale Anmeldenummer: PCT/AT2014/000050
(87) Internationale Veröffentlichungsnummer: WO 2014/165872

(56) Entgegenhaltungen:
- BE-A- 377 910
- DE-A1- 2 248 030
- DE-A1- 2 522 334
- DE-A1- 2 716 454
- US-A- 3 452 968

## Beschreibung

Die Erfindung betrifft eine Brenneinrichtung gemäß dem Oberbegriff des Patentanspruches 1.

Eine Brenneinrichtung ist eine Vorrichtung zum Verbrennen von Brenngut und weist eine Brennkammer auf, in welchem das Brenngut verbrannt wird. Hierbei sind eine Vielzahl unterschiedlicher Brenngüter bekannt, beispielsweise feste, flüssige und gasförmige Brenngüter, welche in entsprechend geformten Brenneinrichtungen verbrannt werden können.

Aus der BE 377 910 A ist eine kreiszylinderförmige Brennkammer bekannt, bei welcher das Brenngut die Brennkammer schraubenförmig entlang deren Mantelfläche von einem Ende zu dem anderen Ende durchquert.

Aus der DE 22 48 030 A1 ist eine gattungsgemäße Brenneinrichtung für eine Kalzinieranlage bekannt, wobei ein Teil des Klinkers in einer Vorverbrennungseinrichtung vorkalziniert wird. Hierbei weist die Vorverbrennungseinrichtung eine zylinderförmige Brennkammer auf, in welcher das Mehl verwirbelt vorkalziniert wird.

Aus der US 3 452 968 A ist ein Kalzinieranlage bekannt, bei welcher in einem Vorkalzinierer eine Verwirbelung stattfindet.

Aus der DE 25 22 334 A1 ist eine Kalzinieranlage mit einem Ofen bekannt, wobei vor dem Eintragsende des Ofens eine trommelartig ausgebildete Verbrennungskammer angeordnet ist, in welche die mit Partikeln des zu behandelnden Materials durchsetzten Abgase des Ofens tangential eingeführt werden.

Aus der DE 27 16 454 A1 ist eine Kalzinieranlagen bekannt, bei welchen in einem Vorkalzinierer eine Verwirbelung stattfindet.

Nachteilig an bekannten Brenneinrichtungen ist, dass sich die Verwendung von Abfall als Brenngut, beispielsweise geschredderter Kunststoff oder Hackschnitzel, anstelle der Verwendung von hochwertigen Brennmaterialien, beispielsweise Erdgas oder Heizöl, als problematisch erweist. Abfallmaterialien als Brenngut können in der Zusammensetzung oder der Form sehr inhomogen sein, weshalb es zu einer lediglichen teilweisen Verbrennung kommen kann. Zur Verwendung von Abfall als Brenngut muss der Abfall entsprechend präpariert, beispielsweise zerkleinert, werden oder die Abbrandstrecke der Brenneinrichtung entsprechend lange ausgebildet sein.

Aufgabe der Erfindung ist es daher eine Brenneinrichtung der eingangs genannten Art anzugeben, mit welchem die genannten Nachteile vermieden werden können, und welcher auch mit einem sehr inhomogenen Brenngut gut betrieben werden kann.

Erfindungsgemäß wird dies durch die Merkmale des Patentanspruches 1 erreicht. Dadurch ergibt sich der Vorteil, dass es durch die spezielle Form der Brenneinrichtung und insbesondere der Brennkammer bei einem inhomogenen Brenngut, wie beispielsweise geschredderter Kunststoff oder Hackschnitzel, zu einer variablen Verweildauer des Brenngutes kommt, wobei sichergestellt werden kann, dass das Brenngut bis zur nahezu vollständigen Verbrennung in der Brennkammer verweilt. Hierbei ist die Brennkammer ähnlich einem Zyklon geformt, wobei noch nicht verbrannte Teile des Brenngutes durch den Gasstrom an einer Seitenwand der Brennkammer rezirkulieren und von der Abgasöffnung abgehalten werden. Erst wenn das Brenngut ausreichend verbrannt ist und eine vorgebbare Größe unterschreitet kann dieses von dem Gasstrom in die Abgasöffnung getragen werden. Durch die an der Unterseite angeordnete Mündung und der nach oben gerichteten Strömung werden hierbei auch schwere Teile des Brenngutes zuverlässig immer wieder in den Verbrennungsprozess eingebracht, sodass eine zuverlässige Verbrennung gewährleistet werden kann. Dadurch kann die Brenneinrichtung auch mit sehr inhomogenen Brenngut betrieben werden, wobei die Brenneinrichtung noch immer kompakt und einfach im Aufbau ist und einen hohen Wirkungsgrad aufweist.
Weiters betrifft die Erfindung eine Anlage zum Herstellen von Zementklinker aus Rohmehl gemäß dem Oberbegriff des Patentanspruches 12.

Bei einer Anlage zum Herstellen von Zementklinker wird ein sogenanntes Rohmehl in einem mehrstufigen Verfahren kalziniert und zu Zementklinker gebrannt. Eine derartige Anlage kann beispielsweise einen Rohmehlvorwärmer zur Erwärmung des Rohmehls aufweisen, wobei der Rohmehlvorwärmer mit einem Drehrohrofen verbunden ist. Um die Leistung des Drehrohrofens, welcher ein besonders aufwendiger und wartungsintensiver Teil der Anlage ist, zu optimieren ist weiters eine Vorkalzinatorbrenneinrichtung vorgesehen, welche das Rohmehl vor dem Einbringen in den Drehrohrofen vorkalziniert.

Weiters betrifft die Erfindung ein Verfahren zum Betreiben einer Brenneinrichtung gemäß dem Patentanspruch 13.

Aufgabe der Erfindung ist es daher weiters ein Verfahren der eingangs genannten Art anzugeben, mit welchem die genannten Nachteile vermieden werden können, und mit welchem eine Brenneinrichtung vorzugsweise mit inhomogenen Brenngut betrieben werden kann.

Erfindungsgemäß wird dies durch die Merkmale des Patentanspruches 13 erreicht. Dadurch können Vorteile erreicht werden, welche analog zu den Vorteilen der Brenneinrichtung sind.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform einer Brenneinrichtung in Vorderansicht;
Fig. 2 die bevorzugte Ausführungsform einer Brenneinrichtung in Seitenansicht;
Fig. 3 die bevorzugte Ausführungsform einer Brenneinrichtung in einer axonometrischen Darstellung;
Fig. 4 die bevorzugte Ausführungsform einer Brenneinrichtung in Seitenansicht als Prinzipskizze;
Fig. 5 die bevorzugte Ausführungsform einer Brenneinrichtung in Vorderansicht als Prinzipskizze;
Fig. 6 eine erste bevorzugte Ausführungsform einer Anlage zum Herstellen von Zementklinker als Prinzipskizze; und
Fig. 7 eine zweite bevorzugte Ausführungsform einer Anlage zum Herstellen von Zementklinker als Prinzipskizze.

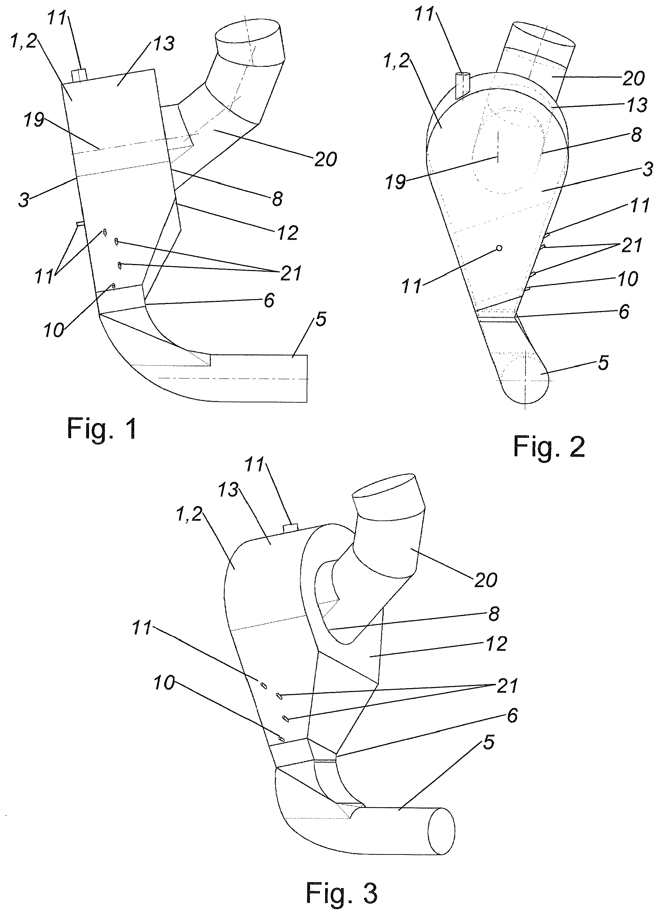

Die Fig. 1 bis 5 zeigen eine bevorzugte Ausführungsform einer Brenneinrichtung 1, wobei eine Brennkammer 2 der Brenneinrichtung 1 eine Abgasöffnung 8 aufweist.

Die Brenneinrichtung 1 ist in diesem Zusammenhang eine Misch- und Zufuhreinrichtung zum geregelten Verbrennen eines, insbesondere festen, Brenngutes mit einem sauerstoffhaltigen Gas, beispielsweise einer Verbrennungsluft. Die Verbrennung des Brenngutes findet im Wesentlichen in der Brennkammer 2 statt.

Vorgesehen ist, dass die Brennkammer 2 einen ersten Bereich 4 aufweist, dass der erste Bereich 4 eine Vielzahl an zueinander parallelen und jeweils einen Kreismittelpunkt aufweisenden kreissegmentförmigen Querschnitte aufweist, wobei eine Verbindung der Kreismittelpunkte im Wesentlichen auf einer Achse 19 liegen, dass eine Gas-Zuleitung 5 mit der Brennkammer 2 eine Mündung 6 ausbildend verbunden ist, dass die Brennkammer 2 im Bereich der Mündung 6 einen Mischbereich 7 zur Durchmischung von über die Gas-Zuleitung 5 zugeführtem Gas mit in der Brennkammer 2 rotierendem Gas aufweist, dass die Mündung 6 in einer Betriebslage an einer Unterseite der Brennkammer 2 angeordnet ist, wobei über die Gas-Zuleitung 5 zugeführtes Gas den ersten Bereich 4 tangential von unten anströmt.

Durch die Anordnung der Mündung 6 an der Unterseite der Brennkammer 2, fallen schwere Teile des Brenngutes unter Einwirkung der Gravitation von selbst auf die Mündung 6, und werden durch den von unten nach oben gerichteten Gasstrom wieder zuverlässig dem Verbrennungsprozess zugeführt, ohne dass sich diese an der Unterseite der Brennkammer 2 anlagern können. Hierdurch wird eine zuverlässige Verbrennung auch der schweren Bestandteile eines inhomogenen Brenngutes erreicht.

Die Brennkammer 2 kann daher insbesondere ähnlich einem Zyklon ausgeführt sein, wobei ein Gasstrom zum Teil im ersten Bereich 4 um die Achse 19 umgelenkt und wieder zum Mischbereich 7 rückgeführt werden kann. Der erste Bereich kann hierbei auch als Umlenkbereich des Gasstromes angesehen werden. Die tangentiale Anströmung des ersten Bereiches 4 von unten bedeutet eine Anströmung im Wesentlichen quer zur Achse 19 und entlang einer Seitenwand 13 der Brennkammer 2, wobei die Anströmung des Gasstromes in Betriebslage im Wesentlichen nach oben, also gegen die Schwerkraft, gerichtet ist. Ein Stück des Brennguts mit großer räumlicher Ausdehnung, also unzureichend verbranntes Brenngut, wird wie bei einem Zyklon an einer Seitenwand 13 der Brennkammer 2 zirkulieren, und kann erst bei ausreichender Verbrennung durch die Abgasöffnung 8 aus der Brennkammer 2 entweichen.

Die Betriebslage ist hierbei jene Lage der Brenneinrichtung 1, welche für den Betrieb der Brenneinrichtung 1, beispielsweise als Teil einer Anlage 14 zum Herstellen von Zementklinker, vorgesehen ist. Die Mündung kann weiters an einem untersten Bereich der Brennkammer 2 angeordnet sein.

Hierbei kann besonders bevorzugt vorgesehen sein, dass in Betriebslage die Achse 19 gegenüber einer Horizontalebene einen Winkel von 0° bis 40°, insbesondere von 0° bis 30°, einschließt. Die Achse 19 kann daher im Wesentlichen horizontal sein, wobei eine Neigung zur Horizontalebene von bis zu 40° insbesondere bis zu 30° vorgesehen sein kann.

Weiters kann vorgesehen sein, dass die Mündung 6 derart ausgebildet ist, dass eine vorgesehene Ausströmrichtung des Gases aus der Mündung 6 einen Winkel von 5° bis 40°, insbesondere 10° bis 30°, zum Lot aufweist.

Weiters kann besonders bevorzugt vorgesehen sein, dass in der Betriebslage die Mündung im Wesentlichen unterhalb der Achse 19 angeordnet ist.

Der erste Bereich 4 kann hierbei besonders bevorzugt kegelstumpfsegmentförmig, insbesondere zylindersegmentförmig, ausgebildet sein. Bei einem zylindersegmentförmig ausgebildeten ersten Bereich 4 sind die Querschnitte von im Wesentlichen gleichbleibender Größe. Hierbei kann die Achse 19, welche im Wesentlichen als Verbindung der Kreismittelpunkte der verschiedenen Querschnitte ausgebildet ist die Rotationsachse des Kegelstumpfes oder Zylinders sein, dessen Form des Segmentes der erste Bereich 4 aufweist.

Hierbei ist vorgesehen, dass die Seitenwand 13 im ersten Bereich 4 als Teil einer Mantelfläche eines Rotationskörpers, beispielsweise eines Kegels oder eines Zylinders, ausgebildet ist, und dass die Achse 19 im Wesentlichen entlang der Rotationsachse dieses Rotationskörpers verläuft.

Bei einem Verfahren zum Betreiben einer Brenneinrichtung 1 mit einer Brennkammer 2 ist vorgesehen, dass ein Gasstrom von unten durch eine an einer Unterseite der Brennkammer 2 angeordnete Mündung 6 einer Gas-Zuleitung 5 in die Brennkammer 2 einströmt, dass sich der aus der Gas-Zuleitung 5 zuströmende Gasstrom in einem im Bereich der Mündung 6 angeordneten Mischbereich 7 mit einem in der Brennkammer 2 rotierendem Gas vermischt, dass der Gasstrom einen ersten Bereich 4 der Brennkammer 2 tangential anströmt, wobei der erste Bereich 4 eine Vielzahl an zueinander parallelen und jeweils einen Kreismittelpunkt aufweisenden kreissegmentförmigen Querschnitte aufweist, wobei eine Verbindung der Kreismittelpunkte im Wesentlichen auf einer Achse 19 liegen, dass der Gasstrom im ersten Bereich 4 um die Achse 19 umgelenkt wird, und dass der Gasstrom über eine Abgasöffnung 8 wieder abgeströmt wird. Hierbei kann insbesondere vorgesehen sein dass ein, insbesondere festes Brenngut mit dem Gasstrom mitgerissen wird, und dass die Verweildauer eines Stückes des Brenngutes von der Größe des Stückes des Brenngutes bestimmt wird. Das Gas kann insbesondere sauerstoffhaltig sein, und besonders bevorzugt mindestens 20% Sauerstoff umfassen. Weiters kann als Gas insbesondere Luft verwendet werden.

Gemäß der bevorzugten Ausführungsform in Fig. 1 bis 5 ist vorgesehen, dass die Brennkammer 2 im Bereich der Mündung 6 der Gas-Zuleitung 5 einen zweiten Bereich 9 mit einem V-förmigen Querschnitt aufweist, wobei der zweite Bereich 9 tangential an den ersten Bereich 4 anschließt. Dass der zweite Bereich 9 tangential an den ersten Bereich 4 bedeutet vorzugsweise, dass die Seitenwand 13 beim Übergang vom ersten Bereich 4 zum zweiten Bereich 9 Knick-frei ausgebildet ist, sodass eine entlang der Seitenwand 13 verlaufende Gasströmung ausgebildet werden kann. Der Mischbereich 7 ist Teil des zweiten Bereiches 9 sein. Die Brennkammer 2 hat hierbei vorzugsweise einen tropfenförmigen Querschnitt. Es ist vorgesehen, dass sich der zweite Bereich 9 zur Mündung 6 hin verjüngt. Durch die Form des zweiten Bereiches 9 kann eine zuverlässige Zuführung von schweren Teilen des Brenngutes an die Mündung 6 erreicht werden. Weiters kann dabei eine gute Durchmischung im zweiten Bereich 9 zwischen neu eintretendem Gas und in der Brennkammer zirkulierendem Gas erreicht werden.

Hierbei kann insbesondere vorgesehen sein, dass wenigstens eine weitere Gas-Zuleitung 21 in der Brennkammer 2, insbesondere im zweiten Bereich 9, mündet. Hierbei kann zusätzliches Gas, welches beispielsweise aus der Gaszuleitung 5 abgezweigt sein kann, in die Brennkammer eingebracht werden, um durch die Zugabe von Sauerstoff den Verbrennungsprozess und den damit verbundenen Wirkungsgrad zu optimieren. Gemäß der bevorzugten Ausführungsform kann beispielsweise vorgesehen sein, dass die weitere Gas-Zuleitung 21 in der Seitenwand 13 mündet.

Weiters kann vorgesehen sein, dass von der Gas-Ableitung 20 eine Rezirkulationsleitung abzweigt, welche in der Gas-Zuleitung 5 und/oder der weiteren Gas-Zuleitung 21 mündet, wobei ein Teil des aus der Abgasöffnung 8 abströmenden Gases als Rezirkulationsgas wieder in die Brennkammer 2 geleitet werden kann.

Gemäß der dargestellten bevorzugten Ausführungsform kann die Gaszuleitung 5, insbesondere unmittelbar vor der Mündung 6, eine Biegung aufweisen. Dadurch kann die Gaszuleitung 5 in vorteilhafter Weise zunächst horizontal zugeführt werden, und dennoch ein nach oben gerichteter Gasstrom erzeugt werden.

Alternativ kann vorgesehen sein, dass die Gaszuleitung 5 gerade ausgeführt ist.

Weiters kann insbesondere vorgesehen sein, dass die kreissegmentförmige Querschnitte des ersten Bereiches 4 größer sind als ein Halbkreis. Dabei kann durch ein Zusammenwirken von dem ersten Bereich 4 und dem zweiten Bereich 9 gut eine geschlossene Umlaufbahn des Gasstromes erreicht werden.

Besonders bevorzugt ist vorgesehen, dass die Abgasöffnung von der Seitenwandung 13 beabstandet angeordnet ist. Hierbei kann verhindert werden, dass schwere Teile des Brenngutes, welche sich durch die Zentrifugalkräfte in der Seitenwand 13 aufhalten, durch die Abgasöffnung 8 austreten können.

Weiters kann bevorzugt vorgesehen sein, dass die Achse 19 die Abgasöffnung 8 schneidet. Dadurch kann zuverlässig ein Austreten zu schwerer Teile des Brenngutes durch die Abgasöffnung 8 verhindert werden, da die schweren Teile des Brenngutes näher an der Seitenwand 13 angeordnet sind.

Besonders bevorzugt ist weiters vorgesehen, dass im zweiten Bereich 9 eine Brenngut-Aufgabeeinrichtung 10 angeordnet ist. Die Brenngut-Aufgabeeinrichtung 10 dient zur Einbringung eines Brenngutes in die Brennkammer und kann insbesondere eine Öffnung im Bereich der Mündung 6 der Gas-Zuleitung 5 aufweisen, durch welche Öffnung das Brenngut in die Brennkammer 2 eingebracht werden kann.

Hierbei kann besonders bevorzugt vorgesehen sein, dass mittels der Brenngut-Aufgabeeinrichtung 10 dem Gasstrom Brenngut zugeführt wird.

Insbesondere kann die Brenngut-Aufgabeeinrichtung 10 zum Einbringen eines festen rieselfähigen Brenngutes, insbesondere eines in der Größe inhomogenen Brenngutes, ausgebildet sein.

Alternativ kann vorgesehen sein, dass das Brenngut zusammen mit dem Gasstrom über die Gas-Zuleitung 5 in die Brennkammer 2 eingebracht wird.

Weiters kann vorgesehen sein, dass als Brenngut Abfallprodukte mit einer inhomogenen Stückgröße verwendet werden. Das Brenngut kann beispielsweise Hackschnitzel umfassen, und/oder eine rieselfähige Masse aus geschredderten Kunststoffabfällen, beispielsweise aus Kunststoffeinwegflaschen.

Weiters kann vorgesehen sein, dass die Brennkammer 2 eine Temperiermittel-Aufgabeeinrichtung 11 aufweist. Die Temperiermittel-Aufgabeeinrichtung 11 dient zum Einbringen eines Temperiermittels, welches Temperiermittel die in der Brenneinrichtung 1 erzeugte Wärmeenergie aufnimmt und/oder die Abbrandgeschwindigkeit des Brenngutes verlangsamt. Die Temperiermittel-Aufgabeeinrichtung 11 kann insbesondere eine Öffnung im Bereich der Mündung 6 der Gas-Zuleitung 5 aufweisen, durch welche Öffnung das Temperiermittel in die Brennkammer 2 eingebracht werden kann.

Hierbei kann vorgesehen sein, dass mittels der Temperiermittel-Aufgabeeinrichtung 11 dem Gasstrom das Temperiermittel zugeführt wird, und dass das Temperiermittel über die Abgasöffnung 8 wieder abgeströmt wird. Insbesondere kann vorgesehen sein, dass als Temperiermittel ein festes und rieselfähiges Material verwendet wird, welche dem Gasstrom in der Brennkammer 2 Wärmeenergie entzieht. Weiters können als Temperiermittel schlecht brennbare Gase, beispielsweise sauerstoffarme Prozessgase, verwendet werden.

Besonders bevorzugt kann vorgesehen sein, dass die Brennkammer 2 eine erste Wandung 3 aufweist, und dass die kreissegmentförmigen Querschnitte des ersten Bereiches 4 im Wesentlichen parallel zu der ersten Wandung 3 angeordnet sind. Hierbei kann eine gute tangentiale Anströmung erreicht werden, wobei im ersten Bereich eine im Wesentlichen konstante Strömungsgeschwindigkeit erreicht werden kann.

Besonders bevorzugt kann vorgesehen sein, dass die erste Wandung 3 eben ist, und dass die kreissegmentförmigen Querschnitte parallel zu der ersten Wandung ist. Weiters kann vorgesehen sein, dass die Achse 19 normal zur ersten Wandung 3 steht.

Alternativ kann die erste Wandung 3 uneben ausgebildet sein, beispielsweise konisch oder gewölbt.

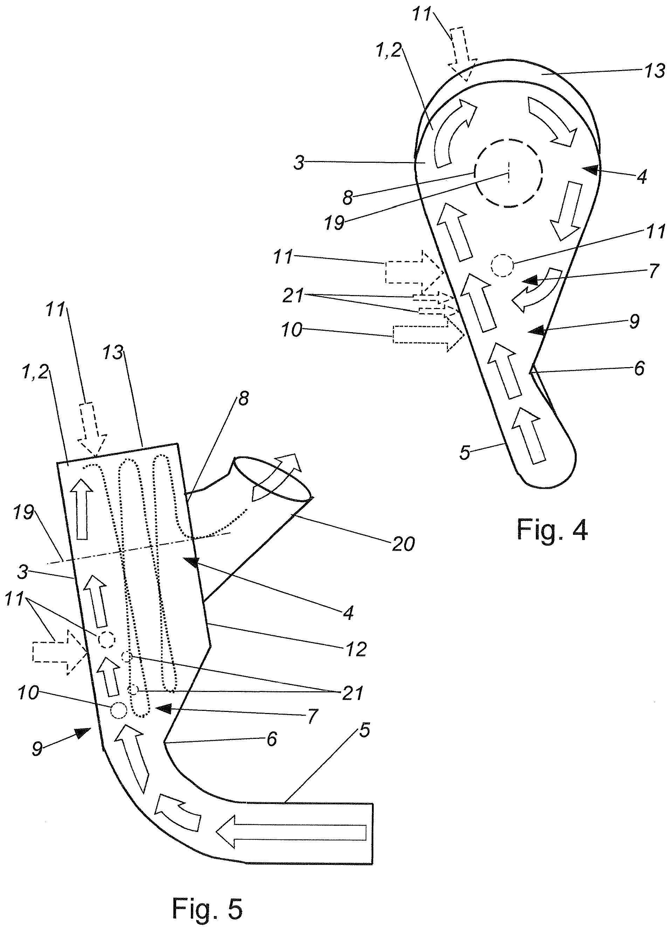

Weiters kann vorgesehen sein, dass die Mündung 6 benachbart zu der ersten Wandung 3 angeordnet ist. Wie in Fig. 5 angedeutet kann dadurch eine anfängliche Verbrennung insbesondere im Bereich der ersten Wandung 3 erfolgen, wobei eine lange Verweildauer des Brenngutes in der Brennkammer 2 erreicht werden kann.

Weiters kann vorgesehen sein, dass die Abgasöffnung im Bereich einer der ersten Wandung 3 gegenüberliegenden zweiten Wandung 12 angeordnet ist. Dabei kann eine lange Verweildauer des Brenngutes in der Brennkammer 2 erreicht werden.

Die zweite Wandung 12 kann insbesondere parallel zu der ersten Wandung 3 sein. Weiters kann vorgesehen sein, dass die Seitenwandung 13 die erste Wandung 3 mit der zweiten Wandung 12 verbindet, wobei die Seitenwandung 13 im ersten Bereich 4 insbesondere normal zu der ersten Wandung 3 sein kann.

Gemäß einer nicht dargestellten Ausführungsform kann alternativ vorgesehen sein, dass die zweite Wandung 12 gegenüber der Achse 19 derart geneigt ist, dass sich die Brennkammer 2 im ersten Bereich 4 mit zunehmendem Abstand von der Mündung 6 verjüngt.

Besonders bevorzugt kann vorgesehen sein, dass in der Betriebslage die erste Wandung 3 gegenüber dem Lot um einen Winkel von 5° bis 30°, insbesondere 5° bis 15° derart geneigt ist, dass zumindest ein Teil der Brennkammer 2 über der ersten Wandung 3 angeordnet ist. Insbesondere kann die Achse 19 gegenüber der Horizontalebene einen Winkel von 5° bis 40°, insbesondere 10° bis 30°, einschließen. Hierbei kann erreicht werden, dass größere und schwerere Teile des Brenngutes durch die Gravitation zur ersten Wandung 3 hin fallen und nicht in die Abgasöffnung 8 abgesaugt werden.

Die Temperiermittel-Aufgabeeinrichtung 11 kann insbesondere an mehreren Stellen angeordnet sein. Hierbei kann die Stelle der verwendeten Temperiermittel-Aufgabeeinrichtung 11 anhand der Zusammensetzung des Brenngutes und des Temperiermittels ausgewählt werden.

Gemäß der bevorzugten Ausführungsform können beispielsweise zwei oder mehr Temperiermittel-Aufgabeeinrichtung 11 vorgesehen sein. Beispielsweise kann eine Temperiermittel-Aufgabeeinrichtung 11 an der Seitenwandung 13 im Mischbereich 7 angeordnet ist. Weiters kann beispielsweise eine Temperiermittel-Aufgabeeinrichtung 11 an der Seitenwandung 13 im ersten Bereich 4 angeordnet sein. Weiters kann vorgesehen sein, dass die Temperiermittel-Aufgabeeinrichtung 11 an der ersten Wandung 3 im Mischbereich angeordnet ist. Hierbei ist die Temperatur des Gases in den unterschiedlichen Bereich unterschiedlich hoch, beispielsweise ist die Temperatur des Gases im Mischbereich 7 noch gering, während dieses im ersten Bereich 4 höher ist. Hierdurch kann die Wirkung des Temperiermittels und damit der Verbrennungsvorgang zusätzlich gesteuert werden.

Insbesondere kann gemäß einer nicht dargestellten Ausführungsform vorgesehen sein, dass die Brenngut-Aufgabeeinrichtung 10 näher an der ersten Wandung 3 angeordnet ist als die Temperiermittel-Aufgabeeinrichtung 11. Dabei kann das im Gasstrom eingebrachte Brenngut zunächst ungehindert verbrannt und erst bei dem Erreichen einer vorgebbaren Temperatur mit dem Temperiermittel versetzt werden.

Weiters kann vorgesehen sein, dass ein Querschnitt der Brennkammer 2 sich von der ersten Wandung 3 ausgehend verändert.

Besonders bevorzugt kann hierbei vorgesehen sein, dass ein Querschnitt der Brennkammer 2 sich von der ersten Wandung 3 ausgehend verjüngt. Dabei können größere Stücke des Brenngutes zunächst von der zweiten Wandung 12 abgehalten und zu einer vorgebbaren Größe verbrennen, bevor diese in den Bereich der Abgasöffnung 8 gelangen.

Insbesondere kann gemäß einer nicht dargestellten Ausführungsform vorgesehen sein, dass die Abgasöffnung 8 einen in die Brennkammer 2 reichenden Kragen aufweist. Dadurch kann verhindert werden, dass sich an der zweiten Wandung 12 angelagertes Brenngut über die erste Wandung 3 geführt und in die Abgasöffnung 8 gesaugt wird.

Weiters kann vorgesehen sein, dass an der Abgasöffnung 8 eine Gas-Ableitung 20 an der Brennkammer 2 angeschlossen ist. Die Gas-Ableitung 20 kann insbesondere als weitere Abbrandstrecke ausgebildet sein, in welchen die aus der Abgasöffnung 8 ausgetretenen Teile des Brenngutes weiters abbrennen können. Da durch die Form der Brennkammer 2 die in die Gas-Ableitung 20 eintretenden Teile des Brenngutes vorzugsweise eine vorgebbare Größe nicht überschreiten, kann die Länge der Abbrandstrecke gering gehalten werden, beispielsweise 10 m bis 30 m.

Weiters kann vorgesehen sein, dass in der Gas-Ableitung 20 im Bereich der Abgasöffnung 8 eine weitere Temperiermittel-Aufgabeeinrichtung 11 angeordnet ist. Hierbei kann weiteres Temperiermittel in die Gas-Ableitung 20 eingebracht werden und durch eine Vermengung und/oder eine Wärmeübertragung mit dem Gas oder dem aus der Abgasöffnung 8 eintretenden Temperiermittel homogen erwärmt werden.

Die Brenneinrichtung 1 eignet sich besonders für eine Anlage 14 zum Herstellen von Zementklinker aus Rohmehl mit einem Rohmehlvorwärmer 15 umfassend zumindest eine Zyklonstufe zur Erwärmung des Rohmehls, einer Vorkalzinatorbrenneinrichtung 16, einem Drehrohrofen 17 und einem Klinkerkühler 18. Zur Herstellung des Zementklinkers wird hierbei das Rohmehl kalziniert und gebrannt. Die Brenneinrichtung 1 ist hierbei besonders bevorzugt in der vorgesehenen Betriebslage angeordnet.

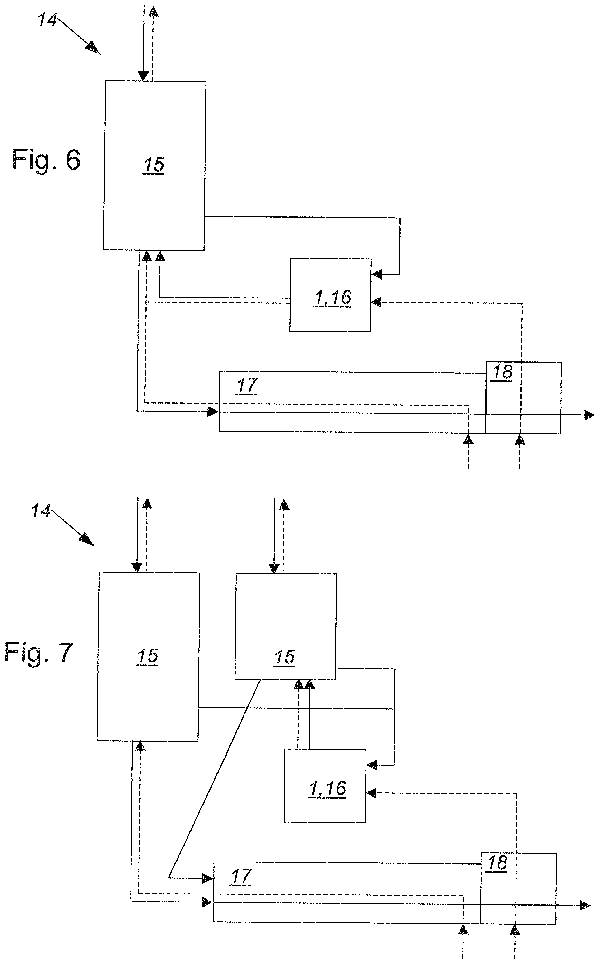

In Fig. 6 und 7 sind bevorzugte Ausführungsformen einer derartigen Anlage 14 schematisch dargestellt, wobei die durchgezogenen Pfeile den Verlauf des Rohmehls oder des Zementklinkers darstellen, und die strichlinierten Pfeile den Gasstrom darstellen.

Der Rohmehlvorwärmer 15 dient zum Vorwärmen des Rohmehls, bevor dieses in den Drehrohrofen 17 gelangt. Hierfür kann aus dem Drehrohrofen 17 kommendes Prozessgas in den Rohmehlvorwärmer 15 geleitet werden. Hierbei kann der Rohmehlvorwärmer 15 mehrere kaskadenartigen miteinander verbundene Zyklone aufweisen, in welchen eine gute Wärmeübertragung erfolgen kann.

Der Drehrohrofen 17 umfasst ein sich drehendes Rohr, in welchem insbesondere unterschiedliche Bereiche, beispielsweise zum Brennen oder Kalzinieren des Rohmehls, vorgesehen sein können.

Die Wärme des fertigen Zementklinkers kann dann insbesondere durch einen dem Drehrohrofen 17 nachgeschalteten Klinkerkühler 18 rekuperiert werden.

Die Vorkalzinatorbrenneinrichtung 16 kann zumindest Teile des Rohmehls vor dem Einbringen in den Drehrohrofen 17 vorkalzinieren.

Hierbei kann besonders bevorzugt vorgesehen sein, dass die Vorkalzinatorbrenneinrichtung 16 als vorstehend beschriebene Brenneinrichtung 1 ausgebildet ist. Dabei kann das Rohmehl als Temperiermittel für die Brenneinrichtung 1 verwendet werden, wobei es durch die Einwirkung der Wärme vorkalziniert wird. Durch die Form der Brenneinrichtung 1 kann weiters verhindert werden, dass unzureichend verbranntes Brenngut, beispielsweise Stücke aus Abfallmaterialien, in das Rohmehl gelangt und dieses kontaminiert. Weiters kann durch den optimierten Verbrennungsvorgang die Kohlenmonoxidbelastung gering gehalten werden.

Hierbei kann insbesondere der Rohmehlvorwärmer 15 mit der Temperiermittel-Aufgabeeinrichtung 10 der Brenneinrichtung 1 verbunden sein, wobei vorgeheiztes Rohmehl als Temperiermittel verwendet wird.

Der Drehrohrofen 17 kann mit einem Klinkerkühler 18 verbunden sein, um den aus dem Rohmehl hergestellten Zementklinker zu kühlen. Hierbei kann insbesondere vorgesehen sein, dass die Gas-Zuleitung 5 von dem Klinkerkühler 18 zu der Brenneinrichtung 1 führt. Dabei wird meistens die beim Klinkerkühler 18 anfallende Wärme zum Aufheizen des Gasstroms, insbesondere der Verbrennungsluft, verwendet.

Weiters kann vorgesehen sein, dass die Abgasöffnung 8 mit dem Rohmehlvorwärmer 15 verbunden ist. Hierbei kann das vorkalzinierte Rohmehl durch den Rohmehlvorwärmer 15 ausgeschieden und in den Drehrohrofen 17 verbracht werden, wobei der durch die Brenneinrichtung 1 aufgeheizte Gasstrom zum Vorwärmen des Rohmehls im Rohmehlvorwärmer 15 weiter verwendet werden wird.

Gemäß Fig. 6 kann besonders bevorzugt vorgesehen sein, dass eine letzte Stufe des Rohmehlvorwärmers 15 mit der Vorkalzinatorbrenneinrichtung 16 und auch mit dem Drehrohrofen 17 verbunden ist. Dadurch kann die Brenneinrichtung 1 kompakt ausgeführt sein.

Alternativ kann vorgesehen sein, dass der Rohmehlvorwärmer 15 ausgangsseitig lediglich mit der Vorkalzinatorbrenneinrichtung 16 verbunden ist. Dabei kann im Wesentlichen das gesamte Rohmehl durch die Vorkalzinatorbrenneinrichtung 16 vorkalziniert werden.

Gemäß Fig. 7 können bevorzugt zwei Rohmehlvorwärmer 15 vorgesehen sein, wobei beide Rohmehlvorwärmer 15 mit der Temperiermittel-Aufgabeeinrichtung 11 verbunden sind, die Abgasöffnung allerdings nur in einem Rohmehlvorwärmer 15 mündet.

## Patentansprüche

1. Brenneinrichtung (1) mit einer Brennkammer (2) die eine Abgasöffnung (8) aufweist, und mit einer Gas-Zuleitung (9), Umlenkbereich eines Gasstromes ausgebildeten ersten Bereich (4) aufweist, wobei der erste Bereich (4) eine Vielzahl an zueinander parallelen und jeweils einen Kreismittelpunkt aufweisenden kreissegmentförmigen Querschnitte aufweist, wobei eine Verbindung der Kreismittelpunkte im Wesentlichen auf einer Achse (19) liegen, wobei eine Seitenwand (13) der Brennkammer (2) im ersten Bereich (4) als Teil einer Mantelfläche eines Rotationskörpers ausgebildet ist, und wobei die Achse (19) im Wesentlichen entlang der Rotationsachse dieses Rotationskörpers verläuft, wobei die Gas-Zuleitung (5) mit der Brennkammer (2) eine Mündung (6) ausbildend verbunden ist, wobei die Mündung (6) in einer Betriebslage an einer Unterseite der Brennkammer (2) angeordnet ist, wobei über die Gas-Zuleitung (5) zugeführtes Gas den ersten Bereich (4) tangential von unten und quer zur Achse (19) anströmt, **dadurch gekennzeichnet, dass** die Brennkammer (2) im Bereich der Mündung (6) einen Mischbereich (7) zur Durchmischung von über die Gas-Zuleitung (5) zugeführtem Gas mit in der Brennkammer (2) rotierendem Gas aufweist, dass die Brennkammer (2) im Bereich der Mündung (6) der Gas-Zuleitung (5) einen zweiten Bereich (9) mit einem V-förmigen zur Mündung (6) hin verjüngenden Querschnitt aufweist, dass der Mischbereich (7) Teil des zweiten Bereiches (9) ist, und dass der zweite Bereich (9) tangential an den ersten Bereich (4) anschließt, so dass sich eine tangentiale Anströmung des ersten Bereiches (4) entlang der Seitenwand (13) ausbildet.

2. Brenneinrichtung (1) nach Anspruch 1, **dadurch gekennzeichnet, dass** in Betriebslage die Achse (19) gegenüber einer Horizontalebene einen Winkel von 0° bis 40°, insbesondere von 0° bis 30°, einschließt.

3. Brenneinrichtung (1) nach Anspruch 1 oder 2, **dadurch gekennzeichnet, dass** die Achse (19) die Abgasöffnung (8) schneidet.

4. Brenneinrichtung (1) nach Anspruch 1 oder 3, **dadurch gekennzeichnet, dass** die Brennkammer (2) eine erste Wandung (3) aufweist, und dass die kreissegmentförmigen Querschnitte des ersten Bereiches (4) im Wesentlichen parallel zu der ersten Wandung (3) angeordnet sind.

5. Brenneinrichtung (1) nach Anspruch 4, **dadurch gekennzeichnet, dass** die Mündung (6) benachbart zu der ersten Wandung (3) angeordnet ist.

6. Brenneinrichtung (1) nach Anspruch 4 oder 5, **dadurch gekennzeichnet, dass** die Abgasöffnung (8) im Bereich einer der ersten Wandung (3) gegenüberliegenden zweiten Wandung (12) angeordnet ist.

7. Brenneinrichtung (1) nach einem der Ansprüche 1 bis 6, **dadurch gekennzeichnet, dass** im zweiten Bereich (9) eine Brenngut-Aufgabeeinrichtung (10) angeordnet ist.

8. Brenneinrichtung (1) nach einem der Ansprüche 1 bis 7 **dadurch gekennzeichnet, dass** die Brennkammer (2) eine Temperiermittel-Aufgabeeinrichtung (11) aufweist.

9. Brenneinrichtung (1) nach Anspruch 4, 7 und 8, **dadurch gekennzeichnet, dass** die Brenngut-Aufgabeeinrichtung (10) näher an der ersten Wandung (3) angeordnet ist als die Temperiermittel-Aufgabeeinrichtung (11).

10. Brenneinrichtung (1) nach einem der Ansprüche 1 bis 9, **dadurch gekennzeichnet, dass** die Abgasöffnung (8) einen in die Brennkammer (2) reichenden Kragen aufweist.

11. Brenneinrichtung (1) nach einem der Ansprüche 1 bis 10, **dadurch gekennzeichnet, dass** wenigstens eine weitere Gas-Zuleitung (21) in der Brennkammer (2) mündet.

12. Anlage (14) zum Herstellen von Zementklinker aus Rohmehl mit einem Rohmehlvorwärmer (15) umfassend zumindest eine Zyklonstufe zur Erwärmung des Rohmehls, einer Vorkalzinatorbrenneinrichtung (16), einem Drehrohrofen (17) und einem Klinkerkühler (18), **dadurch gekennzeichnet, dass** die Vorkalzinatorbrenneinrichtung (16) als Brenneinrichtung (1) gemäß einem der Ansprüche 1 bis 11 ausgebildet ist.

13. Verfahren zum Betreiben einer Brenneinrichtung (1) mit einer Brennkammer (2), wobei ein Gasstrom von unten durch eine an einer Unterseite der Brennkammer (2) angeordnete Mündung (6) einer Gas-Zuleitung (5) in die Brennkammer (2) einströmt, wobei der Gasstrom einen, als Umlenkbereich eines Gasstromes ausgebildeten ersten Bereich (4) der Brennkammer (2) tangential von unten und quer zu einer Achse (19) anströmt, wobei der erste Bereich (4) eine Vielzahl an zueinander parallelen und jeweils einen Kreismittelpunkt aufweisenden kreissegmentförmigen Querschnitte aufweist, wobei eine Verbindung der Kreismittelpunkte im Wesentlichen auf der Achse (19) liegen, wobei eine Seitenwand (13) der Brennkammer (2) im ersten Bereich (4) als Teil einer Mantelfläche eines Rotationskörpers ausgebildet ist, und wobei die Achse (19) im Wesentlichen entlang der Rotationsachse dieses Rotationskörpers verläuft, wobei der Gasstrom im ersten Bereich (4) um die Achse (19) umgelenkt wird, wobei der Gasstrom über eine Abgasöffnung (8) wieder abgeströmt wird, **dadurch gekennzeichnet, dass** sich der aus der Gas-Zuleitung (5) zuströmende Gasstrom in einem im Bereich der Mündung (6) angeordneten Mischbereich (7) mit einem in der Brennkammer (2) rotierendem Gas vermischt, dass die Brennkammer (2) im Bereich der Mündung (6) der Gas-Zuleitung (5) einen zweiten Bereich (9) mit einem V-förmigen zur Mündung (6) hin verjüngenden Querschnitt aufweist, dass der Mischbereich (7) Teil des zweiten Bereiches (9) ist, wobei der zweite Bereich (9) tangential an den ersten Bereich (4) anschließt, so dass sich eine tangentiale Anströmung des ersten Bereiches (4) entlang der Seitenwand (13) ausbildet.

14. Verfahren nach Anspruch 13, **dadurch gekennzeichnet, dass** mittels einer Brenngut-Aufgabeeinrichtung (10) dem Gasstrom Brenngut zugeführt wird.

15. Verfahren nach Anspruch 13 oder 14, **dadurch gekennzeichnet, dass** mittels einer Temperiermittel-Aufgabeeinrichtung (11) dem Gasstrom ein Temperiermittel zugeführt wird, und dass das Temperiermittel über die Abgasöffnung (8) wieder abgeströmt wird.

## Claims

1. Combustion device (1), having a combustion chamber (2), which has an exhaust gas opening (8), and a gas supply line (9), wherein the combustion chamber (2) has a first region (4) which is designed as a deflection region of a gas flow, wherein the first region (4) has a plurality of circular-segment-shaped cross-sections which are parallel to one another and each have a circle center, wherein a connection of the circle centers lies substantially on an axis (19), wherein a side wall (13) of the combustion chamber (2) in the first region (4) is formed as part of a circumferential surface of a rotary body, and wherein the axis (19) extends substantially along the axis of rotation of this rotary body, wherein the gas supply line (5) is connected to the combustion chamber (2) so as to form an orifice (6), wherein the orifice (6) is arranged in an operating position on an underside of the combustion chamber (2), wherein gas supplied via the gas supply line (5) flows tangentially from below and transversely to the axis (19) towards the first region (4), **characterized in that** the combustion chamber (2), in region of the orifice (6), has a mixing region (7) for mixing gas supplied via the gas supply line (5) with gas rotating in the combustion chamber (2), **in that** the combustion chamber (2), in the region of the orifice (6) of the gas supply line (5), has a second region (9) with a V-shaped cross-section tapering towards the orifice (6), **in that** the mixing region (7) is part of the second region (9), and **in that** the second region (9) adjoins the first region (4) tangentially, so that a tangential inflow of the first region (4) is formed along the side wall (13).

2. Combustion device (1) according to claim 1, **characterized in that,** in the operating position, the axis (19) encloses an angle of 0° to 40°, in particular of 0° to 30°, with respect to a horizontal plane.

3. Combustion device (1) according to claim 1 or 2, **characterized in that** the axis (19) intersects the exhaust gas opening (8).

4. Combustion device (1) according to claim 1 or 3, **characterized in that** the combustion chamber (2) has a first wall (3), and **in that** the circular-segment-shaped cross-sections of the first region (4) are arranged substantially parallel to the first wall (3).

5. Combustion device (1) according to claim 4, **characterized in that** the orifice (6) is arranged adjacent to the first wall (3).

6. Combustion device (1) according to claim 4 or 5, **characterized in that** the exhaust gas opening (8) is arranged in the region of a second wall (12) opposite the first wall (3).

7. Combustion device (1) according to one of the claims 1 to 6, **characterized in that** a combustible material feed device (10) is arranged in the second region (9).

8. Combustion device (1) according to one of claims 1 to 7, **characterized in that** the combustion chamber (2) has a tempering agent feed device (11).

9. Combustion device (1) according to claim 4, 7 and 8, **characterized in that** the combustible material feed device (10) is arranged closer to the first wall (3) than the tempering agent feed device (11).

10. Combustion device (1) according to one of claims 1 to 9, **characterized in that** the exhaust gas opening (8) has a collar extending into the combustion chamber (2).

11. Combustion device (1) according to one of the claims 1 to 10, **characterized in that** at least one further gas supply line (21) opens into the combustion chamber (2).

12. Plant (14) for producing cement clinker from raw meal with a raw meal preheater (15) comprising at least one cyclone stage for heating the raw meal, a precalciner combustion device (16), a rotary kiln (17) and a clinker cooler (18), **characterized in that** the precalciner combustion device (16) is designed as a combustion device (1) according to one of claims 1 to 11.

13. Method for operating a combustion device (1) having a combustion chamber (2), wherein a gas stream flows from below through an orifice (6) of a gas supply line (5), which is arranged on an underside of the combustion chamber (2), into the combustion chamber (2), wherein the gas stream flows tangentially from below and transversely to an axis (19) towards a first region (4) of the combustion chamber (2), which region is designed as a deflection region of a gas stream, wherein the first region (4) has a plurality of circular-segment-shaped cross-sections which are parallel to one another and each have a circle center, wherein a connection of the circle centers lies essentially on the axis (19), wherein one side wall (13) of the combustion chamber (2) in the first region (4) is formed as part of a circumferential surface of a rotary body, and wherein the axis (19) extends substantially along the axis of rotation of this rotary body, wherein the gas flow is deflected in the first region (4) about the axis (19), wherein the gas flow is discharged again via an exhaust gas opening (8), **characterized in that** the gas flow flowing in from the gas supply line (5) mixes with a gas rotating in the combustion chamber (2) in a mixing region (7) arranged in the region of the orifice (6), **in that** the combustion chamber (2), in the region of the orifice (6) of the gas supply line (5), has a second region (9) with a V-shaped cross-section tapering towards the orifice (6), **in that** the mixing region (7) is part of the second region (9), wherein the second region (9) adjoins the first region (4) tangentially, so that a tangential inflow of the first region (4) is formed along the side wall (13).

14. Method according to claim 13, **characterized in that** combustible material is supplied to the gas stream by means of a combustible material feed device (10).

15. Method according to claim 13 or 14, **characterized in that** a tempering agent is supplied to the gas flow by means of a tempering agent feed device (11), and **in that** the tempering agent is discharged again via the exhaust gas opening (8).

## Revendications

1. Installation de combustion (1) avec une chambre de combustion (2) présentant une ouverture d'évacuation des gaz brûlés (8) et avec une conduite d'arrivée de gaz (9),
dans laquelle la chambre de combustion (2) présente une première zone (4) conformée comme une zone de déviation d'un flux de gaz, laquelle première zone (4) présente plusieurs sections en forme de segment de cercle parallèles les unes aux autres et présentant chacune un centre de cercle, une ligne qui relie les centres de cercle se trouvant sensiblement sur un axe (19), une paroi latérale (13) de la chambre de combustion (2) étant conformée dans la première zone (4) comme une surface d'enveloppe d'un corps rotatif et l'axe (19) étant orienté sensiblement le long de l'axe de rotation de ce corps rotatif,
dans laquelle la conduite d'arrivée de gaz (5) est reliée à la chambre de combustion (2) en formant une embouchure (6), laquelle embouchure (6) est disposée, dans une position de fonctionnement, sur un côté inférieur de la chambre de combustion (2), le gaz amené par la conduite d'arrivée de gaz (5) parcourant la première zone (4) de façon tangente par le bas et transversalement par rapport à l'axe (19),
**caractérisée en ce que** la chambre de combustion (2) présente au niveau de l'embouchure (6) une zone de brassage (7) pour le mélange du gaz amené par la conduite d'arrivée de gaz (5) avec le gaz qui tourne dans la chambre de combustion (2), **en ce que** la chambre de combustion (2) présente au niveau de l'embouchure (6) de la conduite d'arrivée de gaz (5) une deuxième zone (9) ayant une section qui diminue en forme de V vers l'embouchure (6), **en ce que** la zone de brassage (7) fait partie de la deuxième zone (9) et **en ce que** la deuxième zone (9) fait suite à la première zone (4) de façon tangente, de sorte qu'un écoulement tangent se forme dans la première zone (4) le long de la paroi latérale (13).

2. Installation de combustion (1) selon la revendication 1, **caractérisée en ce que**, dans la position de fonctionnement, l'axe (19) forme avec l'horizontale un angle de 0° à 40°, en particulier de 0° à 30°.

3. Installation de combustion (1) selon la revendication 1 ou 2, **caractérisée en ce que** l'axe (19) coupe l'ouverture d'évacuation des gaz brûlés (8).

4. Installation de combustion (1) selon la revendication 1 ou 3, **caractérisée en ce que** la chambre de combustion (2) présente une première paroi (3) et **en ce que** les sections en forme de segment de cercle de la première zone (4) sont disposées de façon sensiblement parallèle à la première paroi (3).

5. Installation de combustion (1) selon la revendication 4, **caractérisée en ce que** l'embouchure (6) est disposée au voisinage de la première paroi (3).

6. Installation de combustion (1) selon la revendication 4 ou 5, **caractérisée en ce que** l'ouverture d'évacuation des gaz brûlés (8) est disposée au niveau d'une deuxième paroi (12) qui fait face à la première paroi (3).

7. Installation de combustion (1) selon l'une des revendications 1 à 6, **caractérisée en ce qu'**une installation de transfert de matière à cuire (10) est disposée dans la deuxième zone (9).

8. Installation de combustion (1) selon l'une des revendications 1 à 7 **caractérisée en ce que** la chambre de combustion (2) présente une installation de transfert de moyen de régulation de la température (11).

9. Installation de combustion (1) selon les revendications 4, 7 et 8, **caractérisée en ce que** l'installation de transfert de matière à cuire (10) est disposée plus près de la première paroi (3) que l'installation de transfert de moyen de régulation de la température (11).

10. Installation de combustion (1) selon l'une des revendications 1 à 9, **caractérisée en ce que** l'ouverture d'évacuation des gaz brûlés (8) présente un collet qui va jusque dans la chambre de combustion (2).

11. Installation de combustion (1) selon l'une des revendications 1 à 10, **caractérisé en ce qu'**au moins une autre conduite d'arrivée de gaz (21) débouche dans la chambre de combustion (2).

12. Installation (14) pour la fabrication de clinker de ciment à partir de farine crue avec un préchauffeur de farine crue (15) comprenant au moins un étage de cyclone pour chauffer la farine crue, une installation de combustion de pré-calcinateur (16), un four tubulaire rotatif (17) et un refroidisseur de clinker (18), **caractérisée en ce que** l'installation de combustion de pré-calcinateur (16) est conformée comme une installation de combustion (1) selon l'une des revendications 1 à 11.

13. Procédé pour l'exploitation d'une installation de combustion (1) avec une chambre de combustion (2), dans lequel un flux de gaz entre dans la chambre de combustion (2) par le bas à travers une embouchure (6) d'une conduite d'arrivée de gaz (5) disposée sur un côté inférieur de la chambre de combustion (2), dans lequel le flux de gaz s'écoule dans une première zone (4) de la chambre de combustion (2), conçue comme une zone de déviation d'un flux de gaz, de façon tangente par le bas et transversalement par rapport à un axe (19), la première zone (4) présentant plusieurs sections en forme de segment de cercle parallèles les unes aux autres et présentant chacune un centre de cercle, une ligne qui relie les centres de cercle se trouvant sensiblement sur un axe (19), une paroi latérale (13) de la chambre de combustion (2) étant conformée dans la première zone (4) comme une partie d'une surface d'enveloppe d'un corps rotatif, le flux de gaz étant dévié dans la première zone (4) autour de l'axe (19), le flux de gaz étant évacué par une ouverture d'évacuation des gaz brûlés (8), **caractérisé en ce que** le flux de gaz arrivant par la conduite d'arrivée de gaz (5) se mélange, dans une zone de brassage (7) disposée dans la zone de l'embouchure (6), avec un gaz qui tourne dans la chambre de combustion (2), **en ce que** la chambre de combustion (2) présente au niveau de l'embouchure (6) de la conduite d'arrivée de gaz (5) présente une deuxième zone (9) dont la section diminue en forme de V vers l'embouchure (6), **en ce que** la zone de brassage (7) fait partie de la deuxième zone (9), la deuxième zone (9) faisant suite à la première zone (4) de façon tangente, de sorte qu'un écoulement tangent se forme dans la première zone (4) le long de la paroi latérale (13).

14. Procédé selon la revendication 13, **caractérisé en ce que** de la matière à cuire est amenée dans le flux de gaz au moyen d'une installation de transfert de matière à cuire (10).

15. Procédé selon la revendication 13 ou 14, **caractérisé en ce qu'**un moyen de régulation de la température est amené dans le flux de gaz au moyen d'une installation de transfert de moyen de régulation de la température (11) et **en ce que** le moyen de régulation de la température est évacué par l'ouverture d'évacuation des gaz brûlés (8).
